# EUROPÄISCHE PATENTSCHRIFT

(11) **EP 2 398 837 B1**
(45) Veröffentlichungstag und Bekanntmachung des Hinweises auf die Patenterteilung: **10.07.2013**
(21) Anmeldenummer: 10706172.3
(22) Anmeldetag: 01.02.2010
(51) Int. Cl.: C08G 18/42, C08G 18/80, C09D 175/04, C09D 175/06, C09D 175/12, H01B 3/30

(54) **UMWELTFREUNDLICHER LÖTBARER DRAHTLACK**
ECO-FRIENDLY SOLDERABLE WIRE ENAMEL
VERNIS ISOLANT BRASABLE RESPECTUEUX DE L'ENVIRONNEMENT

(30) Priorität: 20.02.2009 DE 102009003512
(43) Veröffentlichungstag der Anmeldung: 28.12.2011
(73) Patentinhaber: Elantas GMBH, 46483 Wesel (DE)
(72) Erfinder: LIENERT, Klaus-W., 22763 Hamburg (DE); WANG, Ding, Anhui 244000 (CN); YE, Lixin, Anhui 244000 (CN); ZHOU, Changshun, Anhui 244000 (CN); GUO, Wenxue, Anhui 244000 (CN)
(74) Vertreter: Fitzner, Uwe
(86) Internationale Anmeldenummer: PCT/EP2010/051182
(87) Internationale Veröffentlichungsnummer: WO 2010/094556

(56) Entgegenhaltungen:
- DE-A1- 3 938 058
- DE-A1- 4 307 848

## Beschreibung

Alle in der vorliegenden Anmeldung zitierten Dokumente sind durch Verweis vollumfänglich in die vorliegende Offenbarung einbezogen (= incorporated by reference in their entirety).

Die vorliegende Erfindung betrifft einen umweltfreundlichen lötbaren Drahtlack zur Erzeugung von lötbaren Überzügen auf Drähten auf Grundlage von Polyurethanen, die in Kohlenwasserstoffen gelöst sind.

### Stand der Technik:

Polyurethane als Elektroisolierbeschichtungsmittel auf der Basis von hydroxylgruppenhaltigen Polyestern und blockierten Isocyanaten sind in großer Zahl bekannt und beispielsweise beschrieben in der DE 195 71 57, DE 100 51 392, DE 195 07 942. Derartige Elektroisolierbeschichtungsmittel zeichnen sich bei ihrer Verwendung als Drahtbeschichtungsmittel insbesondere durch ihre guten isolierenden Eigenschaften aus. Ferner haben sie den Vorteil, dass sie verzinnbar sind. Verzinnbare isolierte Drähte geben beim Eintauchen in ein auf erhöhte Temperaturen erhitztes Lötbad unter Zerstörung der Isolierschicht das blanke Metall des Leiters frei, das somit für elektrisch leitende Verbindungen unmittelbar zugänglich ist. Die Verzinnbarkeit ist auf die Anwesenheit von Urethangruppen im Lackfilm zurückzuführen.

Stand der Technik sind Polyurethandrahtlacke bestehend aus hydroxylgruppenhaltigen Polyestern, blockierten Isocyanaten, Katalysatoren und Hilfsstoffen sowie einem komplexen Lösemittelgemisch. Hauptlösemittel sind kresolische Lösemittel, die mit aromatischen Kohlenwasserstoffen verschnitten werden. Kresole und Xylenole sind technisch verfügbare Lösemittel. Da es sich um Destillationsschnitte handelt schwankt die Isomerenzusammensetzung von Qualität zu Qualität. Von erheblichem Nachteil ist, dass alle kresolischen Lösemittel giftig sind und sich durch einen äußerst unangenehmen Geruch auszeichnen.

Das Verarbeiten dieser Drahtlacke erfolgt auf handelsüblichen Drahtlackieranlagen bei denen das Lösemittelgemisch abgedampft und das Bindemittel gehärtet wird. Das abgedampfte Lösemittel wird in der Lackieranlage verbrannt und zur Heizung des Härtungsofens mitverwendet.

Aus der DE 27 18 898 und der EP 0 055 085 sind Beschichtungsmittel enthaltend Polyesterimide bekannt, die verkappte Isocyanate enthalten. Die dort beschriebenen Beschichtungsmittel sind jedoch unter anderem nicht verzinnbar.

Kresolfreie Drahtlacke sind bekannt, wobei das kresolische Lösemittel durch ein anderes Lösemittel ersetzt wird. Z.B. können Methyldiglykol, Ethyldiglykol, gamma-Butyrolacton (Lienert in "Lösemittel für kresolfreie Drahtlacke", 8. Fachtagung Elektroisoliersysteme, Hamburg 1989), Alkylencarbonate (EP 0 502 858, DE 43 07 848 A1, DE 39 38 058 A1) und viele andere eingesetzt werden. Dadurch dass die alternativen Lösemittel meistens einen geringeren Heizwert als die kresolischen haben, fehlt der Lackiermaschine Energie.

### Aufgabe:

Aufgabe der vorliegenden Erfindung war die Entwicklung eines verzinnbaren Beschichtungsmittels für Drähte, welches kresolfrei gelöst ist. Das alternative Lösemittel soll ein handelsübliches sein, die Komponenten des Lackes alle gut lösen und eine so hohe Verbrennungswärme haben, dass die bestehenden Lackieranlagen damit betrieben werden können, ohne dass zusätzliche Energie, z.B. in Form von elektrischem Strom, zugeführt werden muss.

### Lösung:

Überraschenderweise konnte die Aufgabe dadurch erfüllt werden, dass Solventnaphtha-lösliche, modifizierte hydroxylgruppenhaltige Polyester mit speziellen blockierten Isocyanataddukten, organischen Lösungsmitteln auf Kohlenwasserstoff-Basis, welche ausschließlich aus Kohlenstoff und Wasserstoff aufgebaut sind, sowie den üblichen Katalysatoren und Lackhilfsmitteln formuliert wurden.

Dem Blockierungsmittel der isocyanate kommt hierbei eine Schlüsselrolle zu. Begriffsdefinitionen:

Im Rahmen der vorliegenden Erfindung sind alle Mengenangaben, sofern nicht anders angegeben, als Gewichtsangaben (z.B. Gew.-%) zu verstehen.

Im Rahmen der vorliegenden Erfindung bedeutet der Begriff "Zimmertemperatur" eine Temperatur von 20°C. Temperaturangaben sind, soweit nicht anders angegeben, in Grad Celsius (°C).

Sofern nichts anderes angegeben wird, werden die angeführten Reaktionen bzw. Verfahrensschritte bei Normaldruck (Atmosphärendruck) durchgeführt. Der Ausdruck (Meth)acryl soll im Rahmen der vorliegenden Erfindung sowohl Methacryl als auch Acryl bzw. Mischungen beider umfassen.

Der Ausdruck Alkylphenole steht, soweit nichts anderes angegeben, im Rahmen der vorliegenden Erfindung für Phenole, die mit ein bis fünf C₁-C₅-Alkylgruppen am Benzolkern substituiert sind, mit der Maßgabe, das bei einfacher Substituierung der Alkylrest mindestens zwei Kohlenstoffatome umfaßt.

### Detaillierte Beschreibung:

Gegenstand der Erfindung sind Polyurethan-Drahtlacke bestehend aus:
A) 10-60, bevorzugt 20-50, besonders bevorzugt 25-45, Gew.-% mindestens einem blockiertem Polyisocyanataddukt, welches mit Alkylphenolen blockiert ist,
B) 4-30, bevorzugt 7 - 25, besonders bevorzugt 9 - 20, Gew.-% mindestens einem Ester- und/oder Imid- und/oder Amidgruppen aufweisenden Hydroxypolyester
C) 20 - 70, bevorzugt 30 - 60, besonders bevorzugt 35 - 45, Gew.-% organischen Lösungsmitteln auf Kohlenwasserstoff-Basis, welche ausschließlich aus Kohlenstoff und Wasserstoff aufgebaut sind,
D) 1 - 20, bevorzugt 5-18, besonders bevorzugt 10 - 16, Gew.-% weiteren Hilfs- und Zusatzstoffen,
wobei die Summe der Komponenten A)+B)+C)+D) sich auf 100 Gew.-% addiert.

Zur Herstellung des erfindungsgemäß einzusetzenden blockierten Polyisocyanataddukts A) eignen sich aromatische, aliphatische und cycloaliphatische Polyisocyanate a), bevorzugt Polyisocyanate eines einheitlichen oder im Mittel durchschnittlichen Molekulargewichts von 140-600 mit einer NCO-Funktionalität von 2 - 4. Solche Polyisocyanate sind zum Beispiel Propylendiisocyanat, Ethylethylendiisocyanat, 3,3,4-Trimethylhexamethylendiisocyanat, 1,3-Cyclopentyldiisocyanat, 1,4,-Cyclohexyldiisocyanat, 1,2-Cyclohexyldiisocyanat, 1,3- und 1,4-Phenylendiisocyanat, 2,4- und 2,6-Diisocyanatotoluol (TDI) sowie Gemische dieser Isomere und deren Di- und Trimere, 4,4- 2,4- und 2,2-Diisocyanatodiphenylmethan (MDI) sowie Gemische dieser Isomere oder Gemische dieser Isomere mit ihren höheren Homologen, wie sie in bekannter Weise durch Phosgenierung von Anilin/Formaldehyd-Kondensaten erhalten werden, 1,5-Naphthylendiisocyanat, 1,4-Butandiisocyanat, 2-Methylpentan-1,5-diisocyanat, 1,5-Hexandiisocyanat, 1,6-Hexandiisocyanat (HDI), 1,3- und 1,4-Cyclohexandiisocyanat sowie Gemische dieser Isomere, 2,4- und 2,6-Diisocyanato-1-methylcyclohexan sowie Gemische dieser Isomere, 3,5,5-Trimethyl-3-isocyanatomethylcyclohexanisocyanat (IPDI) und Dicyclohexylmethan-2,4- und -4,4-diisocyanat und Gemische dieser Isocyanate, 4,4'-Diisocyanatodiphenylether und 2,3-Bis-(8-lsocyanatooctyl)-4-octyl-5-hexylcyclohexen, 1-Isocyanatomethyl-5-isocyanato-1,3,3-trimethylcyclohexan, 4,4'-Biphenylendiisocyanat, 1,4-Naphthylendiisocyanat. Bevorzugt werden als Ausgangsisocyanate aromatische Polyisocyanate mit einer NCO-Funktionalität von 2 - 3.

Als Reaktionspartner der Isocyanate a) zur Adduktbildung eignen sich mehrwertige Alkohole b), vorzugsweise Ethylenglykol, 1,2- und 1,3-Propylenglykol, 1,2-, 1,3- und 1,4-Butandiol, 1,5-Pentandiol, Neopentylglykol, Diethylenglykol, Triethylenglykol, Bisphenole, und/oder Triole, vorzugsweise Glyzerin, Trimethylolethan, Trimetylolpropan oder Tris-2-Hydroxyethylisocyanurat (THEIC). Bevorzugt eingesetzt werden Triole, insbesondere Trimetylolpropan und Glyzerin. Ganz besonders bevorzugt wird ein Addukt aus 1 mol Trimethylolpropan und 3 mol 4,4- 2,4- und 2,2-DÜsocyanatodiphenylmethan (MDI) sowie Gemische dieser Isomere oder Gemische dieser Isomere mit ihren höheren Homologen, wie sie in bekannter Weise durch Phosgenierung von Anilin/Formaldehyd-Kondensaten erhalten werden.

Als Blockierungsmittel werden erfindungsgemäß Alkylphenole eingesetzt. Bevorzugt für die Formulierung kresolfreier lötbarer Drahtlacke sind Blockierungsmittel wie alkylierte Phenole, wobei die Alkylkette aus 2 - 6 Kohlenstoffatomen besteht und linear oder auch verzweigt sein kann. Im Falle monosubstituierter Alkylphenole umfaßt der Alkylrest mindestens zwei Kohlenstoffatome. Außer den monosubstituierten Phenolen sind auch di- und trisubstituierte Phenole einsetzbar. Insbesondere bevorzugt sind butylierte Phenole, wie z.B. o-, m-, p-Butylphenol, o-sec-Butylphenol, m-sec-Butylphenol, p-sec-Butylphenol, Di-sec-Butylphenole. Das erfindungsgemäß höchst bevorzugt eingesetzte Produkt ist ein Gemisch von sec-Butylphenolen. Ein Beispiel für ein Handelsprodukt ist Isosolve^{®} 231 der SI-Group^{®}.

In einer Variante der vorliegenden Erfindung kann bei der Herstellung des blockierten Polyisocyanataddukts ein Überschuß an Blockierungsmittel eingesetzt werden, der dann als zusätzliches Lösungsmittel bzw. Co-Löser fungiert.

Gemäß der bevorzugten Herstellform wird das Blockierungsmittel oder Blockierungsmittelgemisch c) vorgelegt. Das Polyisocyanat oder die Polyisocyanate a) werden zugegeben und mit dem Blockierungsmittel abreagiert. Dann werden die bevorzugten Triole und Diole b) zur Adduktbildung zugegeben, abreagiert und es wird mit Solventnaphtha verdünnt.

Höchst bevorzugt sind im Rahmen der vorliegenden Erfindung blockierte Polyisocyanataddukte A), die aus
i) Diisocyanat, insbesondere 4,4-Diisocyanatodiphenylmethan,
ii) Polyol, insbesondere Trimethylolpropan und
iii) substituiertem Phenol, bevorzugt butylsubstituierten Phenolen, insbesondere einem Gemisch von sec-Butylphenolen,
aufgebaut sind.

Zur Herstellung des erfindungsgemäß einzusetzenden Hydroxypolyester B) eignen sich mehrwertige Alkohole d), vorzugsweise Ethylenglykol, 1,2- und 1,3-Propylenglykol, 1,2-, 1,3- und 1,4-Butandiol, 1,5-Pentandiol, Neopentylglykol, Diethylenglykol, Triethylenglykol und/oder Triole, vorzugsweise Glyzerin, Trimethylolethan, Trimetylolpropan oder Tris-2-Hydroxyethylisocyanurat. Besonders bevorzugt werden Ethylenglykol, 1,2- und 1,3-Propylenglykol und Trimethylolpropan sowie Gemische aus diesen Alkoholen.

Des weiteren können für B) aromatische und aliphatische Polycarbonsäuren sowie ihre veresterbaren Derivate e) eingesetzt werden: Oxalsäure, Malonsäure, Bernsteinsäure, Glutarsäure, Adipinsäure, Pimelinsäure, Acelainsäure, Sebacinsäure, Maleinsäure, Fumarsäure, Sorbinsäure, Phthalsäure, Isophthalsäure, Terephthalsäure, Trimesinsäure, Naphthalindicarbonsäuren. Die veresterbaren Derivate sind vorzugsweise Methyl-, Ethyl-, Propyl-, Butyl-, Amyl-, Hexyl- und Octylester. Einsetzbar sind sowohl die Halbester, die Diacylester als auch die Mischungen dieser Verbindungen ebenso wie die entsprechenden Säurehalogenide. Ebenso einsetzbar sind Anhydride wie z.B. Pyromellithsäuredianhydrid und Trimellithsäureanhydrid, Naphthalintetracarbonsäuredianhydride oder Dianhydride von Tetracarbonsäuren mit zwei Benzolkernen im Molekül, bei denen die Carboxylgruppen in 3,3'4- und 4'-Stellung stehen. Bevorzugt werden Terephthalsäure und Trimellithsäureanhydrid.

Des weiteren können in einer bevorzugten Variante für B) aromatische und aliphatische Monocarbonsäuren sowie ihre veresterbaren Derivate eingesetzt werden, um als Endgruppenverschluß die Löslichkeit des Hydroxypolyesters in Solventnaphtha zu verbessern, d.h. es kann ein Teil der terminalen Hydroxylgruppen mit Monocarbonsäuren verestert sein. Beispiele dafür sind Buttersäure, Hexansäure, Stearinsäure, o-, m-, p-Methyl-/ Ethyl-/ Propyl-/Butylbenzoesäuren. Besonders bevorzugt sind die tert.-Butylbenzoesäuren.

Dem Fachmann ist bekannt, dass die Polyesterpolyole B) imidmodifiziert werden können, um das thermische Eigenschaftsprofil zu erhöhen. Zur

Imidmodifizierung der erfindungsgemäß einzusetzenden Polyesterpolyole B) eignen sich aromatische, aliphatische und cycloaliphatische Diamine f) wie Ethylendiamin, Tetramethylendiamin, Hexamethylendiamin, Nonamethylendiamin, Benzidin, Diaminodiphenylmethan, Diaminodiphenylsulfon, -sulfoxid, -ether, -thioether, Phenylendiamine, Toluylen, Dioxylylen, Diamine mit drei Benzolkernen im Molekül, z.B. Bis(4-aminophenoxy)-1,4-benzol, 4,4',-Dicyclohexylmethandiamin, Monoethanolamin und Monopropanolamine, weiterhin Aminocarbonsäuren wie Glycin, Aminopropansäure, Aminocapronsäuren oder Aminobenzoesäuren. Bevorzugt werden aromatische Diamine wie Diaminodiphenylmethan, Diaminodiphenylsulfon, -sulfoxid, -ether, -thioether, Phenylendiamine.

Höchst bevorzugt sind im Rahmen der vorliegenden Erfindung Polyesterpolyole B), die aus
- Alkandiol, insbesondere 1,2-Propylenglykol,
- Triol, insbesondere Trimethylolpropan,
- Polycarbonsäureanhydrid, insbesondere Phthalsäureanhydrid,
- Polycarbonsäureester, insbesondere Dimethylterephthalat und
- aromatischer Säure, insbesondere p-tert.-Butylbenzoesäure
aufgebaut sind.

Zur Herstellung der Polyester- und modifizierten Polyesterharze werden die bekannten Umesterungskatalysatoren verwendet. Beispielsweise kommen Schwermetallsalze, organische Titanate und Zirkonate, Zink-, Zinn- und Cerverbindungen sowie organische Säuren wie p-Toluolsulfonsäure in Betracht. Für die Herstellung der Polyester werden geeignete Katalysatoren in Mengen von 0,01 bis 5, vorzugsweise 0,3 bis 3, Gew.-%, bezogen auf das Einsatzgemisch eingesetzt.

Gemäß einer bevorzugten Herstellform für Komponente B) werden die bevorzugten mehrwertigen Alkohole d), die bevorzugten Carbonsäuren sowie ihre veresterbaren Derivate und Anhydride e) und der bevorzugte Veresterungskatalysator vorlegt und bei einer Temperatur von 100 - 200°C, bevorzugt 140-180°C, kondensiert. Soll eine imidmodifizierte Komponente B hergestellt werden, dann wird einmalig oder portionsweise die imidbildende Komponenten, bevorzugtes Diamin f) mit bevorzugten Anhydrid e) im Verhältnis von 1:3 bis 3:1, bevorzugt 1:0,8 bis 0,8:1, zugegeben. Die Temperatur wird schrittweise auf 180 bis 250°C, bevorzugt 190°C bis 230°C, erhöht und gehalten, bis das Destillat erhalten wurde. Mit Solventnaphtha wird auf den gewünschten Festkörpergehalt verdünnt.

Unter organischen Lösungsmitteln auf Kohlenwasserstoff-Basis sind dabei solche zu verstehen, die ausschließlich aus Kohlenstoff und Wasserstoff aufgebaut sind.

Als organische Lösungsmittel C) für die hergestellten Bindemittel sind in einer Variante solche geeignet ausgewählt aus der Gruppe bestehend aus Xylol, Solventnaphtha, Toluol, Ethylbenzol, Cumol, Schwerbenzol, verschiedenen Solvesso^{(R)} und Shellsol^{(R)}-Typen, Deasol^{(R)} und Gemischen davon.

Dem Fachmann sind diese drei Markennamen/-produkte hinreichend bekannt, so dass eine weitere, detailliertere Beschreibung unnötig ist; diese Produkte werden im wesentlichen durch ihren jeweiligen Siedebereich gekennzeichnet und nicht durch ihre genau definierte chemische Zusammensetzung, es sind im wesentlichen verschiedene Gemische aromatischer Kohlenwasserstoffe, Kohlenwasserstoffgemische und Aromaten-reiche Kohlenwasserstoffgemische. Geeignet sind Kohlenwasserstoffgemische mit einem Siedebereich von 155 bis 175°C, die aus bis zu 99 Gew.-% aromatischen Kohlenwasserstoffen mit 9 oder 10 Kohlenstoffatomen bestehen, ein Beispiel dafür ist Deasol^{(R)} 99.

Ebenso geeignet sind Gemische hochsiedender Aromaten mit Siedebereich 150 bis 170°C (beispielsweise Deasol^{(R)}.

Geeignet sind unter anderem auch Gemische aus Toluen, Xylen und aliphatischen Kohlenwasserstoffen, z.B. Shellsol^{(R)}) X7B, Mischungen von hauptsächlich C₉-Kohlenwasserstoffen mit mehr als 99% aromatischem Anteil, z.B. Shellsol^{(R)}) A100, Mischungen von C₉-C₁₁-Kohlenwasserstoffen mit mehr als 99% aromatischem Anteil, z.B. Shellsol^{(R)}) A150, sowie enge Kohlenwasserstoffschnitte mit einem Flashpoint von >61°C, z.B. Shellsol^{(R)}A150 ND.

Als organische Lösungsmittel C) für die hergestellten Bindemittel sind in einer anderen Variante solche geeignet ausgewählt des Gruppe bestehend aus

Xylol, Solventnaphtha, Toluol, Ethylbenzol, Cumol, Schwerbenzol, C₉-, C₁₀-Aromatengemische, C₁₀-C₁₃-Aromatengemische, Gemische aus Toluen, Xylen und aliphatischen Kohlenwasserstoffen, Mischungen von hauptsächlich C₉-Kohlenwasserstoffen mit mehr als 99% aromatischem Anteil, Mischungen von C₉-C₁₁-Kohlenwasserstoffen mit mehr als 99% aromatischem Anteil, enge Kohlenwasserstoffschnitte mit einem Flashpoint von >61°C und Mischungen davon.

Als organische Lösungsmittel C) für die hergestellten Bindemittel sind in einer anderen Variante solche geeignet ausgewählt aus der Gruppe bestehend aus Xylol, Solventnaphtha, Toluol, Ethylbenzol, Cumol, Schwerbenzol, C₉-, C₁₀-Aromatengemische, C₁₀-C₁₃-Aromatengemische, Mischungen von hauptsächlich C₉-Kohlenwasserstoffen mit mehr als 99% aromatischem Anteil, Mischungen von C₉-C₁₁-Kohlenwasserstoffen mit mehr als 99% aromatischem Anteil und Mischungen davon.

In einer Variante der vorliegenden Erfindung kann neben den genannten Lösungsmitteln als Teil der Komponente C) das für Komponente A) verwendete Blockierungsmittel vorliegen, sofern dies bei der Herstellung der Komponente A) im Überschuß zugegeben wurde.

Neben den beschriebenen Komponenten enthalten die Überzugsmittel auf Polyurethanbasis noch übliche Hilfs- und Zusatzstoffe D). Als Hilfsmittel für die Drahtüberzugsmittel können beispielsweise verlaufsverbessernde Phenol- oder Melaminharze oder andere übliche Verlaufsmittel, I, z.B. auf Basis von Polyacrylaten und Polysiloxanen zum Einsatz kommen. Außerdem ist dem Lackfachmann bekannt, dass Hochsieder wie Alkylencarbonate, Phthalsäureester, hochsiedende Kohlenwasserstoffe wie alkylierte Benzole und Naphthaline, alkylierte Phenole, höher siedende Alkohole, z.B. Butanol und/oder Benzylalkohol, usw., einen positiven Einfluss auf Verlauf und Filmbildung haben. Die Grenze zwischen Additiv und Co-Lösern ist in manchen Fällen fließend.

Außerdem können die erfindungsgemäßen Polyurethandrahtlacke Vernetzungskatalysatoren enthalten. Im Falle der Drahtüberzugsmittel auf Polyurethanbasis haben sich Organometallverbindungen z.B. der Metalle Kalium, Magnesium, Aluminium, Zinn, Blei, Zink, Eisen, Titan, Bismuth, Antimon und Zirkon sowie tertiäre Amine als Vernetzungskatalysatoren bewährt, die üblicherweise in Mengen von 0,2 bis 2,0 Gew.-%, bezogen auf das Gesamtgewicht von hydroxylgruppenhaltigen Polyestern und blockierten Isocyanataddukten eingesetzt werden.

Eine bevorzugte Gruppe von Aktivatoren bzw. Vernetzungskatalysatoren sind Kondensationsprodukte von Aldehyden mit Aminen, besonders bevorzugt von aliphatischen Aldehyden und aromatischen Aminen, insbesondere bevorzugt ist das Reaktionsprodukt von Butyraldehyd mit Anilin. Ein Beispiel eines kommerziell erhältlichen Produktes ist Vulkacit^{(R)} 576 der Firma Lanxess.

Die hyxdroxylhaltigen Polyester B) und das blockierte Isocyanataddukt A) werden in einer erfindungsgemäßen Variante zusammen in einer Menge von 14 bis 90, bevorzugt von 27 bis 75, besonders bevorzugt von 34 bis 65 Gew.-%, bezogen auf das Gesamtgewicht des Polyurethandrahtlacks, eingesetzt. Die Menge an hydroxylgruppenhaltigem Polyester liegt dabei bevorzugt zwischen 30 und 60, insbesondere 37 bis 50 Gewichtsteilen je 100 Gewichtsteile blockiertem Isocyanataddukt, abhängig von dem OH-Äquivalent des (modifizierten) Polyesters und von dem Gehalt an blockierten NCO-Gruppen des Isocyanataddukte. Das Verhältnis von Hydroxylgruppen zu Isocyanatgruppen kann dabei von 3:1 bis 1:3, bevorzugt 2:1 bis 1:2 betragen.

In der höchst bevorzugten erfindungsgemäßen Ausgestaltung besteht der erfindungsgemäße Polyurethandrahtlack, aus
A) 25 - 45, Gew.-% mindestens einem blockiertem Polyisocyanataddukt, welches mit butylierten Phenolen, bevorzugt einem Gemisch aus sec-Butylphenolen, blockiert ist,
B) 9 - 20, Gew.-% mindestens einem Ester- und/oder Imid- und/oder Amidgruppen aufweisenden Hydroxypolyester
C) 35 - 45, Gew.-% organischen Lösungsmitteln auf Kohlenwasserstoff-Basis
D) 10 - 16, Gew.-% weiteren Hilfs- und Zusatzstoffen,
wobei die Summe der Komponenten A)+B)+C)+D) sich auf 100 Gew.-% addiert, und wobei
- die blockierten Polyisocyanataddukte A) aus 4,4-Diisocyanatodiphenylmethan, Trimethylolpropan und einem Gemisch von sec-Butylphenolen aufgebaut sind
und/oder
- die Polyesterpolyole B), aus 1,2-Propylenglykol, Trimethylolpropan, Phthalsäureanhydrid, Dimethylterephthalat und p-tert.-Butylbenzoesäure aufgebaut sind.

Die Polyurethandrahtlacke werden mittels üblicher Drahtlackiermaschinen aufgebracht und gehärtet. Dabei wird die jeweils erforderliche Lackfilmstärke durch mindestens 1 bis zu 20, bevorzugt 1 bis 10, Einzelaufträgen aufgebaut, wobei jeder einzelne Lackauftrag vor dem erneuten Lackauftrag blasenfrei ausgehärtet wird. Übliche Lackiermaschinen arbeiten mit Abzugsgeschwindigkeiten von 5 m/min. bis zu mehreren hundert m/min., je nach Dicke des zu beschichtenden Drahtes. Typische Ofentemperaturen liegen zwischen 300 und 550°C.

Bevorzugte Lackierbedingungen:

| | |
|---|---|
| Temperatur : | ca. 500°C |
| Auftragssystem : | Filz |
| Drahtdurchmesser : | 0,50 mm |
| Zahl der Durchzüge : | 8 |
| Zunahmegrad : | 2 L |

Die lackierten Drähte werden nach IEC 60851 geprüft.

Ein großer Vorteil der erfindungsgemäßen Drahtlacke ist, dass diese insgesamt gesehen aus billigeren Rohstoffen bestehen, als herkömmliche Drahtlacke, insbesondere im Hinblick auf die verwendeten Lösemittel.

Die erfindungsgemäßen Drahtlacke sind zudem weniger umweltbelastend. Dies stellt große Vorteile in ökologischer sowie ökonomischer Hinsicht dar.

Die verschiedenen Ausgestaltungen der vorliegenden Erfindung, z.B. diejenigen der verschiedenen abhängigen Ansprüche, können dabei in beliebiger Art und Weise miteinander kombiniert werden.

Die Erfindung wird nun unter Bezugnahme auf die folgenden nicht-limitierenden Beispiele erläutert.

### Beispiel 1: Herstellung eines blockierten Polyisocyanataddukts A1

In einer Reaktionsapparatur mit einem Kondensatabscheider wurden unter Rühren und Einleitung von Stickstoff 108 g Isosolve 231^{®}, 216 g Solventnaphtha und 271 g 4,4-Diisocyanatodiphenylmethan eingewogen. Der Ansatz wurde auf 40°C erhitzt. Separat wurde eine Mischung aus 41 g Trimethylolpropan und 164 g Isosolve 231^{®} hergestellt. Diese wurde in den Kolben zugegeben. Die Temperatur wurde auf 60°C erhöht. Dann wurden 0,2 g Dibutylzinndilaurat zugegeben. Die Temperatur stieg durch die Reaktion. Sie wurde bei 120°C für eine Stunde gehalten. Der Ansatz wurde auf 80°C gekühlt und die restlichen Lösemittel, 97 g Solventnaphtha, 49 g Dimethylphthalat und 49 g Propylencarbonat zugegeben und 2 Stunden gerührt. Das erhaltene Polyisocyanataddukt hatte eine Viskosität von ca. 3900 mPas (23°C) und einen Festkörpergehalt von 52% (1 g/1h/130°C).

### Beispiel 2: Herstellung eines blockierten Polyisocyanataddukts A2

In einer Reaktionsapparatur mit einem Kondensatabscheider wurden unter Rühren und Einleitung von Stickstoff 350 g Isosolve 231^{®} und 265 g 4,4-Diisocyanatodiphenylmethan eingewogen. Der Ansatz wurde auf 120°C erhitzt. Dann wurden 0,1 g Dibutylzinndilaurat zugegeben und eine Stunde gerührt. Es wurde auf 100°C gekühlt und 40 g Trimethylolpropan wurden zugegeben. Die Temperatur wurde auf 150°C erhöht und nach einer halben Stunde wurden bei 80°C 344 g Solventnaphtha zugegeben und 2 Stunden gerührt. Das erhaltene Polyisocyanataddukt hatte eine Viskosität von ca. 3400 mPas (23°C) und einen Festkörpergehalt von 49% (1g/1h/130°C).

### Beispiel 3: Herstellung eines erfindungsgemäßen Hydroxypolyesters B1

In einer Reaktionsapparatur mit einem Kondensatabscheider wurden unter Rühren und Einleitung von Stickstoff folgende Komponenten eingewogen: 51 g 1,2-Propylenglykol, 188 g Trimethylolpropan, 101 g Phthalsäureanhydrid und 0,4 g Zinkacetat. Dann wurde auf 215°C erhitzt. Nach Beendigung der Destillation wurde auf 165°C abgekühlt und es wurden 132 g Dimethylterephthalat und 132 g p-tert.-Butyl-Benzoesäure zugegeben. Bei 218°C wurde der Ansatz zuendekondensiert. Bei 165°C wurde mit 395 g Solventnaphtha angelöst. Der so hergestellten Hydroxypolyester B1 hatte eine Viskosität von 3000 mPas (30°C) und einen Festkörper von 43% (1 g/1h/180°C).

### Beispiel 4: Herstellung eines erfindungsgemäßen Hydroxypolyesters B2

In einer Reaktionsapparatur mit einem Kondensatabscheider wurden unter Rühren und Einleitung von Stickstoff folgende Komponenten eingewogen: 43 g 1,2-Propylenglykol, 165 g Trimethylolpropan, 89 g Phthalsäureanhydrid und 0,4 g Zinkacetat. Dann wurde auf 215°C erhitzt. Nach Beendigung der Destillation wurde auf 165°C abgekühlt und es wurden 116 g Dimethylterephthalat und 116 g p-tert.-Butyl-Benzoesäure zugegeben. Bei 218°C wurde der Ansatz zuendekondensiert. Bei 165°C wurde mit 391 g Solventnaphtha und 78 g Dimethylphthalat angelöst. Der so hergestellte Hydroxypolyester B1 hatte eine Viskosität von 3200 mPas (30°C) und einen Festkörper von 44% (1g/1h/180°C).

### Beispiel 5: Herstellung eines erfindungsgemäßen Drahtlackes 1

In einem Mischer wurden folgende PUR-Lackrohstoffe eingewogen: 485 g Polyisocyanataddukt A1, 183 g Hydroxypolyester B1, 145 g Solventnaphtha, 2 g Vulkacit^{®} 576, 2 g Dibutylzinndilaurat, 17 g Butanol, 43 g Benzylalkohol. Der Lackansatz wurde 4 Stunden intensiv gerührt. Mit 121 g Solventnaphtha wurde der Drahtlack auf einen Festkörper von 42% (3g/1h/180°C) und 370 mPas (23°C) eingestellt.

### Beispiel 6: Herstellung eines erfindungsgemäßen Drahtlackes 2

In einem Mischer wurden folgende PUR-Lackrohstoffe eingewogen: 572 g Polyisocyanataddukt A2, 253 g Hydroxypolyester B2, 169 g Solventnaphtha, 2 g Vulkacit^{®} 576 und 2 g Dibutylzinndilaurat. Der Lackansatz wurde 2 Stunden intensiv gerührt. Der Drahtlack wurde mit Solventnaphtha auf einen Festkörper von 37% (3g/1h/180°C) und 330 mPas (23°C) eingestellt.

### Lackierergebnisse:

Die erfindungsgemäßen Drahtlacke wurden auf einer SICME SEL450 mit Düsen und acht Durchzügen mit 45 m/min. und einer Zunahme von 2L auf 0,5 mm Draht lackiert. Die lackierten Drähte wurden nach IEC 60851 geprüft.

Prüfergebnisse:

| | Drahtlack 1 | Drahtlack 2 |
|---|---|---|
| Außenfaserdehnung | | |
| 1xD 10% | 3\3 | 3\3 |
| 1xD 15% | 2\3 | 2\3 |
| 1xD 20% | 0\3 | 0\3 |
| Wärmeschock 180°C, 30 Min. | 2xD i.O. | 2xD i.O. |
| Wärmedruck | 250°C i.O. | 240°C i.O. |
| Durchschlagspannung | 6,8 kV | 6,9 kV |
| Tangens-Delta (Tgδ) Knickpunkt | 158°C | 155°C |
| Lötzeit | 3,5 s | 3,5 s |
| Pin hole (12V, 6m) 5% Vordehnung | 0/0/4 | 0/0/2 |

Die Ergebnisse entsprechen handelsüblichen kresolischen Drahtlacken.

## Patentansprüche

1. Kresolfrei gelöster Polyurethan-Drahtlack bestehend aus:
A) 10 - 60 Gew.-% mindestens einem blockiertem Polyisocyanataddukt, welches mit Alkylphenolen blockiert ist
B) 4 - 30 Gew.-% mindestens einem Ester- und/oder Imid- und/oder Amidgruppen aufweisenden Hydroxypolyester
C) 20 - 70 Gew.-% organischen Lösungsmitteln auf
Kohlenwasserstoff-Basis, welche ausschließlich aus Kohlenstoff und Wasserstoff aufgebaut sind
D) 1 - 20 Gew.-% weiteren Hilfs- und Zusatzstoffen,
wobei die Summe der Komponenten A)+B)+C)+D) sich auf 100 Gew.-% addiert.

2. Kresolfrei gelöster Polyurethan-Drahtlack nach Anspruch 1, **dadurch gekennzeichnet, dass**
A) der Anteil von A) 20-50 Gew.-% beträgt, bevorzugt 25-45 Gew.-%, bezogen auf das Gewicht des Elektroisolierlackes,
B) der Anteil von B) 7-25 Gew.-% beträgt, bevorzugt 9-20 Gew.-%, bezogen auf das Gewicht des Elektroisolierlackes,
C) der Anteil von C) 30-60 Gew.-% beträgt, bevorzugt 35-55 Gew.-%, bezogen auf das Gewicht des Elektroisolierlackes,
D) der Anteil von D) 5-18 Gew.% beträgt, bevorzugt 10-16 Gew.-%, bezogen auf das Gewicht von Polyisocyanataddukt und Polyester-Hydroxypolyol,
wobei die Summe der Komponenten A)+B)+C)+D) sich auf 100 Gew.-% addiert.

3. Kresolfrei gelöster Polyurethan-Drahtlack nach einem der Ansprüche 1 oder 2, **dadurch gekennzeichnet, dass** das Polyisocyanataddukt A) mit butylsubstituierten Phenolen, insbesondere einem Gemisch von sec-Butylphenolen, blockiert ist.

4. Kresolfrei gelöster Polyurethan-Drahtlack nach einem der Ansprüche 1 bis 3, **dadurch gekennzeichnet, dass** die Komponente C) Solventnaphtha enthält oder hieraus besteht.

5. Kresolfrei gelöster Polyurethan-Drahtlack nach Anspruch 4, **dadurch gekennzeichnet, dass** die Komponente C) Solventnaphtha und das für Komponente A) verwendete Blockierungsmittel enthält oder hieraus besteht.

6. Kresolfrei gelöster Polyurethan-Drahtlack nach einem der Ansprüche 1 bis 5, **dadurch gekennzeichnet, dass** ein Teil der terminalen Hydroxylgruppen der Komponente B) mit Monocarbonsäuren, bevorzugt tert.-Butylbenzoesäuren, verestert ist.

7. Verfahren zur Herstellung der kresolfrei gelösten Polyurethan-Drahtlacke nach einem der Ansprüche 1 bis 6, **dadurch gekennzeichnet, dass** man die Bestandteile A), B), C) und D) miteinander mischt.

8. Verwendung der kresolfrei gelösten Polyurethan-Drahtlacke nach einem der Ansprüche 1 bis 6 zur Beschichtung von Kupferdrähten und/oder Aluminiumdrähten.

## Claims

1. A polyurethane wire enamel in cresol-free solution, composed of:
A) 10%-60% by weight of at least one blocked polyisocyanate adduct,
blocked with alkylphenols,
B) 4% - 30% by weight of at least one hydroxy polyester containing ester and/or imide and/or amide groups,
C) 20% - 70% by weight of hydrocarbon-based organic solvents, solely built from carbon and hydrogen,
D) 1% - 20% by weight of further auxiliaries and additives,
the sum of the components A)+B)+C)+D) adding to 100% by weight.

2. The polyurethane wire enamel in cresol-free solution of claim 1, **characterized in that**
A) the fraction of A) is 20-50% by weight, preferably 25-45% by weight, based on the weight of the electrically insulating enamel,
B) the fraction of B) is 7-25% by weight, preferably 9-20% by weight, based on the weight of the electrically insulating enamel,
C) the fraction of C) is 30-60% by weight, preferably 35-55% by weight, based on the weight of the electrically insulating enamel,
D) the fraction of D) is 5-18% by weight, preferably 10-16% by weight, based on the weight of polyisocyanate adduct and polyester-hydroxy polyol,
the sum of the components A)+B)+C)+D) adding up to 100% by weight.

3. The polyurethane wire enamel in cresol-free solution of either of claims 1 and 2, **characterized in that** the polyisocyanate adduct A) is blocked with butyl-substituted phenols, more particularly with a mixture of sec-butyl-phenols.

4. The polyurethane wire enamel in cresol-free solution of either of claims 1 to 3, **characterized in that** component C) is composed of or comprises solvent naphtha.

5. The polyurethane wire enamel in cresol-free solution of claim 4, **characterized in that** component C) is composed of or comprises solvent naphtha and the blocking agent used for component A).

6. The polyurethane wire enamel in cresol-free solution of any of claims 1 to 5, **characterized in that** a portion of the terminal hydroxyl groups of component B) is esterified with monocarboxylic acids, preferably *tert-*butylbenzoic acids.

7. A method for producing the polyurethane wire enamels as a cresol-free solution of any of claims 1 to 6, **characterized in that** constituents A), B), C), and D) are mixed with one another.

8. The use of the polyurethane wire enamels in cresol-free solution of any of claims 1 to 6 for coating copper wires and/or aluminum wires.

## Revendications

1. Vernis pour fils métalliques à base de polyuréthane, dissous sans crésol, constitué de :
A) 10 - 60 % en poids d'au moins un adduit polyisocyanate bloqué, qui est bloqué avec des alkylphénols
B) 4 - 30 % en poids d'au moins un hydroxypolyester comportant des groupes ester et/ou imido et/ou amido
C) 20 - 70 % en poids de solvants organiques à base d'hydrocarbures, qui sont constitués exclusivement de carbone et d'hydrogène,
D) 1 - 20 % en poids d'autres adjuvants et additifs, la somme des composants A)+B)+C)+D) étant égale à 100 % en poids.

2. Vernis pour fils métalliques à base de polyuréthane, dissous sans crésol, selon la revendication 1, **caractérisé en ce que**
A) la proportion de A) vaut 20-50 % en poids, de préférence 25-45 % en poids, par rapport au poids du vernis électro-isolant,
B) la proportion de B) vaut 7-25 % en poids, de préférence 9-20 % en poids, par rapport au poids du vernis électro-isolant,
C) la proportion de C) vaut 30-60 % en poids, de préférence 35-55 % en poids, par rapport au poids du vernis électro-isolant,
D) la proportion de D) vaut 5-18 % en poids, de préférence 10-16 % en poids, par rapport au poids de l'adduit polyisocyanate et du polyester-hydroxypolyol,
la somme des composants A)+B)+C)+D) étant égale à 100 % en poids.

3. Vernis pour fils métalliques à base de polyuréthane, dissous sans crésol, selon la revendication 1 ou 2, **caractérisé en ce que** l'adduit polyisocyanate A) est bloqué avec des phénols substitués par butyle, en particulier un mélange de sec-butylphénols.

4. Vernis pour fils métalliques à base de polyuréthane, dissous sans crésol, selon l'une quelconque des revendications 1 à 3, **caractérisé en ce que** le composant C) contient ou consiste en du solvant naphta.

5. Vernis pour fils métalliques à base de polyuréthane, dissous sans crésol, selon la revendication 4, **caractérisé en ce que** le composant C) contient ou consiste en du solvant naphta et l'agent de blocage utilisé pour le composant A).

6. Vernis pour fils métalliques à base de polyuréthane, dissous sans crésol, selon l'une quelconque des revendications 1 à 5, **caractérisé en ce qu'**une partie des groupes hydroxy terminaux du composant B) est estérifiée par des acides monocarboxyliques, de préférence des acides tert-butylbenzoïques.

7. Procédé pour la préparation des vernis pour fils métalliques à base de polyuréthane, dissous sans crésol, selon l'une quelconque des revendications 1 à 6, **caractérisé en ce qu'**on mélange entre eux les composants A), B), C) et D).

8. Utilisation des vernis pour fils métalliques à base de polyuréthane, dissous sans crésol, selon l'une quelconque des revendications 1 à 6, pour le revêtement de fils de cuivre et/ou de fils d'aluminium.
